# EUROPÄISCHE PATENTSCHRIFT

(11) **EP 0 399 297 B1**
(45) Veröffentlichungstag und Bekanntmachung des Hinweises auf die Patenterteilung: **14.07.1993**
(21) Anmeldenummer: 90108788.2
(22) Anmeldetag: 10.05.1990
(51) Int. Cl.: F16C 23/08, F16C 33/48

(54) **Zweireihiges Pendelrollenlager**
Spherical roller bearing having two rows of rollers
Roulement articulé à deux series de rouleaux

(30) Priorität: 20.05.1989 DE 3916552
(43) Veröffentlichungstag der Anmeldung: 28.11.1990
(73) Patentinhaber: SKF GmbH, D-97419 Schweinfurt (DE)
(72) Erfinder: Dittenhöfer, Thomas, D-8721 Dittelbrunn (DE)

(56) Entgegenhaltungen:
- DE-A- 2 413 612
- DE-B- 1 072 433
- DE-C- 848 125
- FR-A- 2 539 829
- GB-A- 929 146

## Beschreibung

Die Erfindung betrifft ein zweireihiges Pendelrollenlager mit einem Außenring mit sphärischer Bohrung und einem Innenring sowie dazwischen auf Laufbahnen des Außen- bzw. Innenringes laufenden Rollen, die eine konvex gewölbte Mantelfläche aufweisen und in einem Räfig hinsichtlich ihrer gegenseitigen Abstände und auf den Laufbahnen hinsichtlich der Ausrichtung ihrer Drehachsen geführt sind, wobei der Käfig in zwei je eine Reihe von Rollen aufnehmenden Hälften geteilt und jede Käfighälfte in der Bohrung des Außenringes gleitend geführt und auf dem Innenring zwischen den Rollenreihen ein loser Führungsring angeordnet ist.

Ein derartiges Pendelrollenlager ist beispielsweise durch die DE-C-848 125 bekannt. Bei diesem bekannten Lager ist der Kühleffekt des Öls am Innenring aufgrund der abschirmenden Wirkung des Käfigs begrenzt.

Der vorliegenden Erfindung liegt die Aufgabe zugrunde, die Gebrauchsdauer von thermisch hoch beanspruchten zweireihigen Pendelrollenlagern der eingangs genannten Art zu erhöhen.

Diese Aufgabe wird dadurch gelöst, daß die Käfighälften in einem Abstand voneinander angeordnet sind, der gleich oder größer ist als der Durchmesser einer Ölzuführungsbohrung, die den Außenring im Bereich zwischen den beiden Hälften des Käfigs radial durchsetzt.

Durch die hierdurch mögliche hohe Öldurchsatzmenge wird eine große Wärmeabfuhr am Innenring erzielt, so daß das Öl im Schmierspalt eine hohe Viskosität behält, die eine lange Lebensdauer des Lagers sicherstellt.

Weitere vorteilhafte Ausgestaltungen des erfindungsgemäßen Pendelrollenlagers sind in den Unteransprüchen beschrieben.

Einzelheiten der Erfindung sind in der folgenden Beschreibung eines Ausführungsbeispiels näher erläutert.

Es zeigen:
- Fig. 1: ein zweireihiges Pendelrollenlager gemäß der Erfindung im Schnitt,
- Fig. 2: einen Teil der Seitenansicht des in der Figur 1 dargestellten Käfigs.

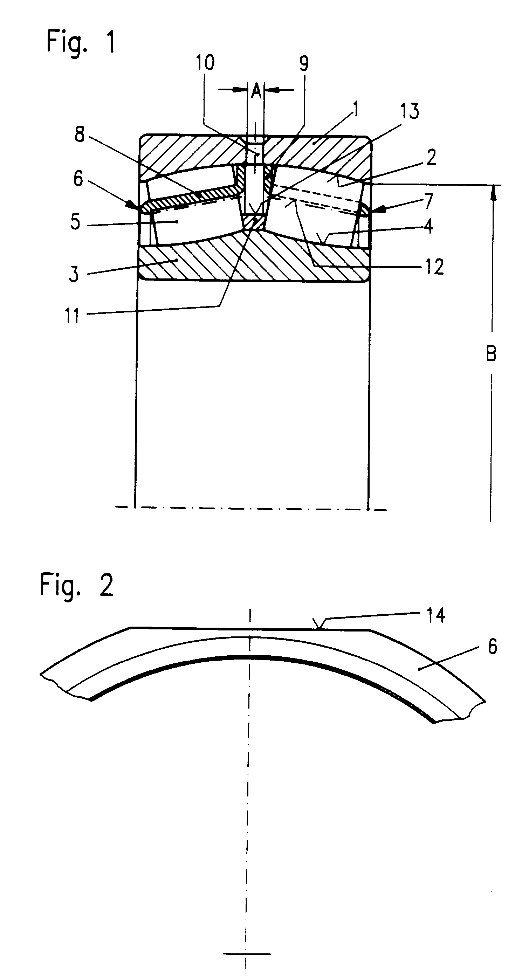

Das in der Figur 1 dargestellte Pendelrollenlager besteht aus einem Außenring 1 mit einer sphärischen Laufbahnfläche 2, einem Innenring 3 mit sphärischen Laufbahnflächen 4, zwei Reihen von Rollen 5 und einem Fensterkäfig aus einem metallischen Werkstoff, z.B. Stahl oder einem ähnlich steifen und hitzebeständigen Material. Der Käfig ist in zwei je eine Reihe von Rollen 5 aufnehmenden Hälften 6,7 in radialer Richtung geteilt. Die zwischen den Rollen 5 vorgesehenen Käfigstege 8 sind radial außerhalb des die Rotationsachsen der Rollen 5 berührenden Hüllkreises angeordnet und weisen in Umfangsrichtung einen Abstand voneinander auf, der kleiner ist als der Durchmesser einer Rolle 5. Die Käfighälften 6, 7 sind auf den einander zugekehrten Seiten mit radial nach außen gerichteten Flanschen 9 versehen, die an der Laufbahnfläche 2 des Außenringes 1 anliegen und die Käfighälften 6,7 führen. Der Abstand A zwischen den Käfighälften 6,7 ist gleich oder größer ausgeführt als der Durchmesser der Ölzuführungsbohrung 10 im Außenring 1, so daß ein Ölstrom ungehindert über den Innenring 3 geleitet wird. In diesem Zusammenhang ist es vorteilhaft, den Außendurchmesser des losen Führungsbordes 11 so klein wie möglich auszuführen, damit der Abstand zwischen den Bohrungsflächen 12 der Käfighälften 6, 7 und der Mantelfläche 13 des losen Führungsbordes 11 möglichst groß ist. Durch den "Quetscheffekt" der Rollen 5 und die turbulente Strömung des Öls an den Innenring-Laufbahnflächen 4 wird ein besserer Wärmeübergangskoeffizient erzielt. Ferner sind niedrige Ölumlaufmengen erforderlich. An der äußeren Mantelfläche der Käfigflansche 9 sind jeweils zwei diametral gegenüberliegend angeordnete Abflachungen 14 vorgesehen, die parallel zueinander verlaufen und deren Abstand voneinander geringfügig kleiner ist als der kleinste Bohrungsdurchmesser B des Außenringes 1, so daß die Käfighälften 6,7 bei der Montage in einer um 90° verdrehten Stellung in den Außenring 1 eingeschoben und dann in ihre Betriebslage geschwenkt werden können.

Diese beschriebene Ausführungsform stellt nur ein Beispiel eines erfindungsgemäßen Pendelrollenlagers dar. Änderungen in der Konstruktion der einzelnen Bauteile sind im Rahmen der Erfindung ohne weiteres möglich.

## Patentansprüche

1. Zweireihiges Pendelrollenlager mit einem Außenring (1) mit sphärischer Bohrung und einem Innenring (3) sowie dazwischen auf Laufbahnen (2, 4) des Außen- bzw. Innenringes (1 bzw. 3) laufenden Rollen (5), die eine konvex gewölbte Mantelfläche aufweisen und in einem Käfig hinsichtlich ihrer gegenseitigen Abstände und auf den Laufbahnen (2, 4 ) hinsichtlich der Ausrichtung ihrer Drehachsen geführt sind, wobei der Käfig in zwei je eine Reihe von Rollen (5) aufnehmenden Hälften (6, 7) geteilt und jede Käfighälfte (6, 7) in der Bohrung des Außenringes (1) gleitend geführt und auf dem Innenring (3) zwischen den Rollenreihen ein loser Führungsring (11) angeordnet ist, **dadurch gekennzeichnet, daß** die Käfighälften (6, 7) in einem Abstand (A) voneinander angeordnet sind, der gleich oder größer ist als der Durchmesser einer Ölzuführungsbohrung (10), die den Außenring (1) im Bereich zwischen den beiden Hälften (6, 7) des Käfigs radial durchsetzt.

2. Zweireihiges Pendelrollenlager nach Anspruch 1, dadurch gekennzeichnet, daß die Käfighälften (6, 7) auf den einander zugewandten Stirnflächen Flansche (9) aufweisen, deren jeweils äußere Mantelflächen auf der Bohrungsfläche (2) des Außenringes (1) gleitend angeordnet sind.

3. Zweireihiges Pendelrollenlager nach Anspruch 1 oder 2, dadurch gekennzeichnet, daß die in Achsrichtung der Rollen (5) ausgerichteten und zwischen den Rollen (5) angeordneten Käfigstege (8) der Käfighälften (6,7) radial außerhalb des die Rotationsachsen der Rollen (5) berührenden Hüllkreises vorgesehen sind.

4. Zweireihiges Pendelrollenlager nach einem der Ansprüche 1 bis 3, dadurch gekennzeichnet, daß an der äußeren Mantelfläche der Käfigflansche (9) zwei diametral gegenüberliegend angeordnete Abflachungen (14) vorgesehen sind, die parallel zueinander verlaufen und in einem Abstand voneinander angeordnet sind, der kleiner ist als der kleinste Bohrungsdurchmesser (B) des Außenringes (1), so daß die Käfighälften (6, 7) bei der Montage in einer um 90 ° verdrehten Stellung in den Außenring (1) eingeschoben und dann in ihre Betriebslage geschwenkt werden können.

## Claims

1. Double row spherical roller bearing comprising one outer ring (1) with sphered bore and one inner ring (3) and between them rollers (5) running on raceways (2, 4) of the outer and inner ring (1 and 3), the rollers having a crowned outside diameter and being guided in a cage with regard to their relative distance and on the raceways (2, 4) with regard to the orientation of their rotational axis, the cage being split into two halves (6, 7) taking up one row of rollers (5) each, each cage half (6, 7) being guided sliding in the outer ring (1) bore, and a loose guide ring (11) being centred on the inner ring (3) between the roller rows, characterised in that the cage halves (6, 7) are located at a distance (A) from each other which is equal to or more than the diameter of an oil supply hole (10) radially bored through the outer ring (1) in the area between the two cage halves (6, 7).

2. Double row spherical roller bearing as claimed in claim 1, characterised in that the cage halves (6, 7) are provided on the lateral faces with flanges (9) facing each other, the outer outside diameters of which are arranged sliding on the bore surface (2) of the outer ring (1).

3. Double row spherical roller bearing as claimed in claims 1 or 2, characterised in that the cage bars (8) of the cages halves (6, 7) arranged in direction of the roller (5) axes and located between the rollers (5) are positioned radially outside the envelope diameter of the rotational axes of the rollers (5).

4. Double row spherical roller bearing as claimed in one of claims 1 to 3, characterised in that two flats (14) diametrically opposite are designed on the outer outside diameter of the cage flanges (9), arranged parallel to each other at a distance which is less than the smallest bore diameter (B) of the outer ring (1) so that on mounting, the cage halves (6, 7) can be inserted in the outer ring (1) at a right angle and then swivelled into their operating position.

## Revendications

1. Roulement à rotule sur rouleaux à deux rangées comprenant une bague extérieure (1) avec alésage sphérique et une bague intérieure (3) et entre eux des rouleaux (5) entraînés en rotation sur des chemins de roulement (2, 4) de la bague extérieure et intérieure (1 et 3), les rouleaux ayant un diamètre extérieur bombé et étant guidés sur une cage par rapport à leur distance et sur les chemins de roulement (2, 4) par rapport à l'orientation de leur axe de rotation, la cage étant divisée en deux moitiés (6, 7) dont chacune guide une rangée de rouleaux (5), chaque moitié de cage (6, 7) étant guidée à glissement dans l'alésage de la bague extérieure (1) et une bague libre de guidage (11) étant centrée sur la bague intérieure entre les deux rangées de rouleaux, caractérisé par le fait que les moitiés de cage (6, 7) ont une distance (A) l'une de l'autre égale ou supérieure au diamètre d'un conduit amenant l'huile (10) qui perce radialement la bague extérieure (1) dans la zone entre les deux moitiés de cage (6, 7).

2. Roulement à rotule sur rouleaux à deux rangées suivant la revendication 1, caractérisé par le fait que les moitiés de cage (6, 7) aux faces tournées l'une vers l'autre ont des flasques (9) dont les diamètres extérieurs côté extérieur glissent sur l'alésage (2) de la bague extérieure (1).

3. Roulement à rotule sur rouleaux à deux rangées suivant la revendication 1 ou 2, caractérisé par le fait que les barrettes (8) des moitiés de cage (6, 7) orientées en direction de l'axe des rouleaux (5) et arrangées entre les rouleaux sont placées à l'extérieur du diamètre enveloppe des axes de rotation des rouleaux (5).

4. Roulement à rotule sur rouleaux à deux rangées selon l'une des revendications 1 à 3, caractérisé par le fait que deux méplats (14) diamétralement opposés sont prévus sur le diamètre extérieur des flasques (9) de la cage, étant parallèles et ayant une distance inférieure au diamètre minimal de l'alésage (B) de la bague extérieure (1) de façon que pendant le montage les moitiés de cage (6, 7) peuvent être introduites dans la bague extérieure (1) tournées de 90° et alors pivotées dans leur position d'opération.
